# EUROPÄISCHE PATENTSCHRIFT

(11) **EP 1 233 423 B1**
(45) Veröffentlichungstag und Bekanntmachung des Hinweises auf die Patenterteilung: **02.01.2004**
(21) Anmeldenummer: 02009648.3
(22) Anmeldetag: 29.09.1999
(51) Int. Cl.: G21C 9/016, G21C 11/08, G21C 9/00, G21C 15/18

(54) **Vorrichtung zum Kühlen und zum Schutz eines Reaktordruckbehälters bei Kernschmelzunfällen**
Apparatus for cooling and protecting a reactor pressure vessel in the event of a core melting accident
Dispositif pour le refroidissement et la protection de la cuve sous pression d'un réacteur en cas de fusion du coeur

(30) Priorität: 07.10.1998 DE 19846057
(43) Veröffentlichungstag der Anmeldung: 21.08.2002
(62) Teilanmeldung aus: 99119357.4
(73) Patentinhaber: Forschungszentrum Jülich GmbH, 52425 Jülich (DE)
(72) Erfinder: Von Lensa, Werner, Dr., 52379 Langerwehe (DE); Fröhling, Werner, Dr., 52351 Düren (DE); Kugeler, Kurt, Prof. Dr., 52428 Jülich (DE)
(74) Vertreter: COHAUSZ & FLORACK

(56) Entgegenhaltungen:
- WO-A-98/13832
- US-A- 3 935 063
- US-A- 5 343 506
- US-A- 5 699 394
- PATENT ABSTRACTS OF JAPAN vol. 1996, no. 07, 31. Juli 1996 (1996-07-31) & JP 08 075887 A (MITSUBISHI ATOM POWER IND INC)

## Beschreibung

Die Erfindung betrifft eine Vorrichtung zum Kühlen und zum Schutz eines Reaktordruckbehälters bei Kernschmelzunfällen.

Bei Kernkraftwerken (KKW) mit wassergekühlten Reaktorkernen kann bei Verlust der Kühlung bzw. bei Kühlmittelverlust-Störfällen (Loss-of-Coolant Accidents (LOCA)) wegen der durch die Nachwärme bedingten Aufheizung der Brennstäbe und durch die nachfolgende exotherme Oxidation der Brennstabhüllen sowie weiterer Strukturmaterialien des Reaktorkerns (Reaktorcores) ein partielles oder vollständiges Schmelzen von Brennstoff und Strukturmaterialien auftreten. Die dabei entstehende Kernschmelze wird sich - der Schwerkraft folgend - in den unteren Bereichen des Reaktordruckbehälters ansammeln.

Je nach Unfallablauf kann die Kernschmelze dabei auch explosionsartig mit dem Restwasser in der Bodenkalotte reagieren (Dampfexplosion). Dadurch kann die gesamte Integrität des Reaktordruckbehälters gefährdet werden. Folgeschäden am Reaktorsicherheitsbehälter mit Austritt von Radioaktivität sind unter diesen Bedingungen nicht mit letzter Sicherheit auszuschließen. Außerdem muß das Problem eventueller Rekritikalitäten der Kernschmelze beachtet werden.

Durch die extrem hohen Temperaturen im Bereich von über 2000°C und wegen der in dieser frühen Unfallphase noch relativ hohen Nachwärmeproduktion in der Größenordnung von ca. 50 MW bei großen Leistungsreaktoren kann die Bodenkalotte des Reaktordruckbehälters schmelzen und die Kernschmelze in die tiefer gelegenen Bereiche des Reaktorsicherheitsbehälters (Containments) austreten. Je nach Störfallszenario kann es dabei erneut zu Dampfexplosionen und final eventuell auch zum Durchschmelzen des Bodenfundaments kommen.

Vor diesem Hintergrund sind Maßnahmen zur Beherrschung der Kernschmelze entweder durch Vermeidung des Durchschmelzens des Reaktordruckbehälters oder durch spezielle Vorrichtungen zum Auffangen und Kühlen der Kernschmelze in sogenannten "Corecatchern" bei fortschrittlichen Reaktorsystemen vorgesehen. Dabei ist unbestritten, daß eine Beherrschung der Kernschmelze im Reaktordruckbehälter (In-Vessel Core Retention Strategy (IVCRS)) mit Erhalt der Integrität des Reaktordruckbehälters deutliche Vorteile hätte. Die Konsequenzen eines Kernschmelzunfalls würde sich dann auf die Unfallabläufe des Three-Miles-Island (TMI) Unfalls beschränken lassen, bei welchem es zu keinen Gefährdungen der Umgebung trotz weit fortgeschrittener Kernschmelze gekommen war. Allerdings zeigen die nachträglichen Untersuchungen, daß die Integrität des Reaktordruckbehälters nur durch die eingeleiteten Kühlmaßnahmen erhalten blieb.

Die gegenwärtig in Betrieb befindlichen Leichtwasser-Reaktoren (LWR) verfolgen eine Sicherheitsphilosophie, nach der durch zuverlässige redundante und z.T. diversitäre aktive Sicherheitssysteme das Eintreten der oben beschriebenen Störfälle extrem unwahrscheinlich ist und durch weitere Unfallbeherrschungsmaßnahmen (Accident Management (AM)) z.B. externe Wasser- / Stromversorgung der Störfallablauf beeinflußt und beherrscht werden kann. Vorrichtungen zum Auffangen und Kühlen der Kernschmelze bei derartigen hypothetischen Unfällen sind bislang nur in Einzelfällen z.B. beim Schnellen Brüter (SNR 300) in Kalkar realisiert worden.

Im Gegensatz zur Beherrschung der Kernschmelze im Reaktordruckbehälter wird bei den neuen Konzepten fortschrittlicher Leichtwasserreaktoren, z.B. der Europäische Druckwasser-Reaktor (EPR), ein Durchschmelzen des Reaktordruckbehälters hingenommen. Ein nachfolgender Kontakt der austretenden Kernschmelze mit Wasser wird zur Vermeidung von Ex-Vessel Dampfexplosionen konzeptionell verhindert. Erst nach Ausbreitung der Kernschmelze im Bereich des Corecatchers soll die Kernschmelze im Kontakt mit Wasser gekühlt werden, wobei erneut energetische Reaktionen von Schmelze und Wasser nicht vollständig auszuschließen sind.

Bei den existierenden Reaktoren - mit Ausnahme einiger Reaktoren russischer Bauart (WWER) mittlerer Leistung - ist eine Kühlung des Reaktordruckbehälters durch Flutung der Reaktorkaverne (Pit-Flooding) nicht vorgesehen und nachträglich wegen der notwendigen Wassermengen, Wassereintritts- und Dampfaustrittsöffnungen im Bereich der Reaktorkaverne und Behälterisolation auch kaum realisierbar. Neuere Konzepte von Reaktoren mittlerer Leistungsgröße mit verstärkter Nutzung passiver Sicherheitseinrichtungen, z.B. AP-600 von Westinghouse, USA, sehen dagegen bei schweren Störfällen mit Auftreten von Kernschmelzen eine schnelle Druckentlastung des Primärkreises und die Flutung der gesamten Reaktorkaverne vor, um damit eine effektive Außenkühlung des Reaktordruckbehälters zu gewährleisten.

Die Wärmestromdichten an der Außenoberfläche des Reaktordruckbehälters können - speziell bei höheren Reaktorleistungen - dabei jedoch so hoch sein, daß nach anfänglichem konvektiven Wärmeübergang mit Blasensieden ein Umschlag zum Filmsieden nicht ausgeschlossen werden kann. Dies hätte jedoch eine deutliche Erhöhung des Wärmeübergangswiderstandes mit nachfolgendem Schmelzen des Reaktordruckbehälters zur Folge.

Die WO 98/13832 offenbart eine Vorrichtung zum Kühlen eines Reaktordruckbehälters, bei dem außerhalb des Druckbehälters eine Schichtstruktur aufgebaut ist, in der Kühlwasser vorhanden ist, dessen Kapazität ausreicht, um ein Überhitzen des Reaktordruckbehälters zu verhindern.

Die US 5,343,506 offenbart ebenfalls einen Reaktordruckbehälter mit einem Abstandszwischenraum, der mit einem äußeren Kühlsystem verbunden ist. Innerhalb des Abstandszwischenraumes ist ein Kühlmittel zum Kühlen des Reaktordruckbehälters angeordnet, um ein Überhitzen des Reaktordruckbehälters zu verhindern.

Die US 5,699,394 offenbart eine Vorrichtung zum Kühlen eines Reaktordruckbehälters mit einer Wandung, die die Außenseite des Reaktordruckbehälters im Bereich der Bodenkalotte unter Bildung eines Zwischenraumes umgibt, in den im Fall eines Unfalles Kühlwasser als Wärmeträger eingeleitet wird. Der Raum zwischen Wandung und Kavität dient als Kühlvorrichtung, welche von einer Luftströmung durchzogen wird. Durch die Verwendung von Wasser als Wärmeträger bildet sich in dem Zwischenraum Dampf. Dies führt zu einem vergleichsweise schlechten Wärmekontakt zwischen dem Reaktordruckbehälter und der Außenseite der Wandung, an der die Kühlvorrichtung vorgesehen ist.

Durch die JP 08 075887 ist offenbart, einen Raumbereich zwischen der Außenwand eines Reaktordruckbehälters und einer Isolationswandung im Falle eines Kernschmelzeunfalls mit Wasser zu fluten, um so eine Kühlung des Reaktordruckbehälters zu gewährleisten. Auch hier besteht die Gefahr, dass ein Sieden des Wassers dazu führt, daß der Wärmekontakt zwischen Reaktordruckbehälter und Kühlmittel verschlechtert wird.

Der Erfindung liegt ausgehend vom Stand der Technik das technische Problem zugrunde, den Wärmekontakt zwischen dem Reaktordruckbehälter und der mit der Außenseite der Wandung verbundenen Kühlvorrichtung im Falle eines Kernschmelzeunfalls derart zu verbessern, daß ein Schmelzen des Reaktordruckbehälters vermieden wird, im Normalbetrieb des Reaktors aber eine Wärmeisolierung des Reaktordruckbehälters gewährleistet ist.

Dieses technische Problem wird durch eine Vorrichtung gelöst, bei der ein Kühlmittelvorratsbehälter, eine Wandung, die die Außenseite des Reaktordruckbehälters zumindest im Bereich der Bodenkalotte mit einem vorgegebenen Abstand umgibt und einen Zwischenraum bildet, eine Kühlvorrichtung, die die Wandung zumindest teilweise umgibt, und ein Behälter zur Aufnahme eines Wärmeträgers vorgesehen ist, wobei der Behälter bei Erreichen einer vorgegebenen Temperatur den Wärmeträger in den Zwischenraum abgibt und der Wärmeträger eine Schmelztemperatur zwischen 100°C und 300°C aufweist und einen Siedepunkt größer als 2000°C.

Dadurch wird erreicht, daß im Falle einer Kernschmelze die hohe Wärmeleistung vom Reaktordruckbehälter nach außen über die sich im Zwischenraum ausbildende Schicht aus flüssigem Wärmeträgermaterial und die Wandung an das in der Kühlvorrichtung enthaltende Kühlmittel abtransportiert wird. Dadurch wird eine ausreichende Kühlung des Reaktordruckbehälters erreicht, so daß ein Durchschmelzen der Bodenkalotte des Reaktordruckbehälters vermieden werden kann. Die Temperatur des Schmelzpunktes und die des Siedepunktes des Wärmeträgers gewährleisten, daß der Wärmeträger zum einen in den Zwischenraum fließen kann und zum anderen in dem Temperaturbereich, den die Kernschmelze erreichen kann, nicht anfängt zu sieden. Denn ein Sieden, insbesondere ein Filmsieden, würde den Wärmekontakt zwischen Reaktordruckgefäß und Wandung wieder deutlich verschlechtern und es bestünde nach wie vor die Gefahr des Durchschmelzens des Reaktordruckgefäßes.

In bevorzugter Weise umgibt die Wandung den Reaktordruckbehälter bis über die zu erwartende maximale Höhe der Kernschmelze oder bis zur Oberkante des Reaktorkerns, so daß der Reaktordruckbehälter zumindest in dem Bereich effektiv gekühlt wird, der besonders stark von der durch die Kernschmelze erzeugte Wärmeleistung belastet wird. Durch die Außenkühlung kann der Vorgang des Abschmelzen außerdem verzögert oder auf Teilbereiche im Innern des Reaktorkerns beschränkt bleiben.

In weiter bevorzugter Weise ist der Zwischenraum zumindest teilweise mit einem Isoliermaterial ausgefüllt, das vorzugsweise aus Fasermaterial oder aus Blechen besteht. Somit wird während des normalen Betriebes durch den Zwischenraum eine zusätzliche Wärmeisolierung erzeugt, die im Falle einer Kernschmelze von dem flüssigen Wärmeträger durchdrungen wird.

Dazu ist der Wärmeträger als schmelzfähiges Granulat ausgebildet und besteht vorzugsweise aus einer Blei- oder Zinnlegierung. Weiterhin kann der Wärmeträger als Wärmeöl, Paraphin oder als Salz und vorzugsweise strahlungsresistent ausgebildet sein.

Die Kühlvorrichtung ist in einer ersten Ausführungsform als ein Kühlmittelbecken ausgebildet, das von dem Kühlmittelvorratsbehälter gespeist ist. Weiterhin gibt der Kühlmittelvorratsbehälter bei Erreichen einer vorgegebenen Temperatur ein Kühlmitttel in das Kühlmittelbecken ab. Dazu weist der Kühlmittelvorratsbehälter eine sich in das Kühlmittelbecken erstreckendes Zuführleitung auf, die mit einer Schmelzsicherung versehen ist. Dadurch ist sichergestellt, daß im Normalfall der Reaktordruckbehälter nicht mit einem Kühlmittel beaufschlagt ist, während im Falle einer Kernschmelze das Kühlmittel wirksam werden kann.

Die Kühlvorrichtung ist in einer zweiten Ausführungsform mit mindestens einem Kühlrohr versehen, das mit der Wandung direkt im Wärmekontakt steht und das von dem Kühlmittelvorratsbehälter mit Kühlmittel beaufschlagt ist. Dabei ist in bevorzugter Weise die Kühlvorrichtung modular aus einer Mehrzahl von Kühlrohren aufgebaut. Durch das relativ geringe Bauvolumen der vorgeschlagenen Kühlvorrichtung werden die benötigten Kühlwassermengen gegenüber einer Flutung der gesamten Kernkaverne drastisch reduziert. Ein nachträglicher Einbau z.B. anstelle vorhandener Isolationen des Reaktordruckbehälters ist wegen der geringen Baugröße der Außenkühleinrichtung grundsätzlich denkbar.

Kritische Wärmestromdichten an der Oberfläche der Reaktordruckbehälters werden durch Einbringen leicht schmelzender Materialien (z.B. Blei- und Zinnlegierungen) zwischen die Oberfläche der Bodenkalotte des Reaktordruckbehälters und einer speziellen Kühlvorrichtung vermieden. Die übertragene Wärme wird an Kühlwasserbecken bzw. an Kühlsysteme abgegeben. Die Wärmeübergangsverhältnisse werden durch die schmelzenden Materialien, die schon bei Temperaturen zwischen 100 und 300 °C flüssig sind, entscheidend verbessert, so daß ein Filmsieden sicher verhindert wird.

Aufgrund der beschriebenen Vorrichtungen ist eine vollständige Flutung der Reaktorkaverne nicht erforderlich. Die außerhalb des Reaktordruckbehälters angeordnete Kühleinrichtung kann im Normalbetrieb auch die Funktion einer Behälterisolierung übernehmen.

Die beschriebenen Vorrichtungen eignen sich nach entsprechender Qualifikation und Anpassung an die konstruktiven Gegebenheiten grundsätzlich sowohl für existierende als auch für zukünftige Kernkraftwerke mit wassergekühlten Reaktorkernen.

Weitere Merkmale und Vorteile der vorliegenden Erfindung werden in der folgenden Beschreibung verschiedener Ausführungsbeispiele näher erläutert, wobei auf die Zeichnung Bezug genommen wird. In der Zeichnung zeigen
- Fig. 1: eine erfindungsgemäße Vorrichtung zum Kühlen eines Reaktordruckbehälters mit einem ersten Ausführungsbeispiel einer Vorrichtung zum Aufteilen des Volumens,
- Fig. 2: eine erfindungsgemäße Vorrichtung zum Kühlen eines Reaktordruckbehälters mit einem zweiten Ausführungsbeispiel einer Vorrichtung zum Aufteilen des Volumens,
- Fig. 3: den Reaktordruckbehälter im Bereich der Einströmvorrichtung im Schnitt entlang der Linie III-III in Fig. 1 und 2,
- Fig. 4: eine erfindungsgemäße Vorrichtung zum Kühlen eines Reaktordruckbehälters mit zwei Ausführungsbeispielen einer den Reaktordruckbehälter umgebenden Kühlvorrichtung und
- Fig. 5: eine Darstellung der Verhältnisse bei Kernschmelze bei einem Reaktorsicherheitsbehälter aus dem Stand der Technik.

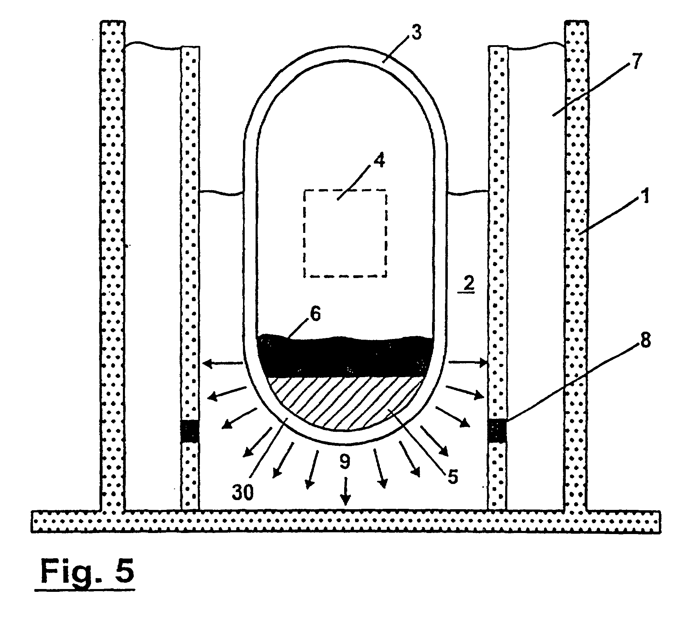

Die Fig. 5 zeigt schematisch die Verhältnisse innerhalb eines aus dem Stand der Technik bekannten Reaktorsicherheitsbehälters 1, der für eine Flutung der gesamten Reaktorkaverne 2 ausgelegt ist, in der sich auch der Reaktordruckbehälter 3 mit dem Reaktorkern 4 befindet. In einem Kühlmittelverluststörfall (LOCA) oder bei Ausfall der Nachwärmeabfuhr kann es zur Verlagerung der geschmolzenen Kernbestandteile in die Bodenkalotte 30 des Reaktordruckbehälters 3 kommen, wobei sich eine metallische Schmelzphase 5 im unteren Bereich sowie darüber eine oxidische Phase 6 in Abhängigkeit von den Temperaturen und Konvektionsvorgängen in der Kernschmelze ausbilden.

Zur Flutung der Reaktorkaverne nach Eintritt der Kernschmelze sind große Wassermengen 7 vorzuhalten oder einzubringen, die z.B. über eine Schmelzsicherung 8 in die Reaktorkaverne 2 eingelassen werden, noch bevor es zur Beschädigung des Reaktordruckbehälters 3 kommen kann. Die Pfeile 9 symbolisieren die hohen Wärmestromdichten an der Oberfläche des Reaktordruckbehälters 3, die zur Kühlung und damit zum Erhalt der Integrität der Bodenkalotte 30 bewältigt werden müssen.

Bei der dargestellten und in ähnlicher Form bei fortschrittlichen Leichtwasserreaktoren angewandten Ausführung kann es jedoch schon bei Verlagerung der Kernschmelze zu Dampfexplosionen im Reaktordruckbehälter 3 (in-vessel) kommen, welche die Integrität des Reaktordruckbehälters 3 gefährden können.

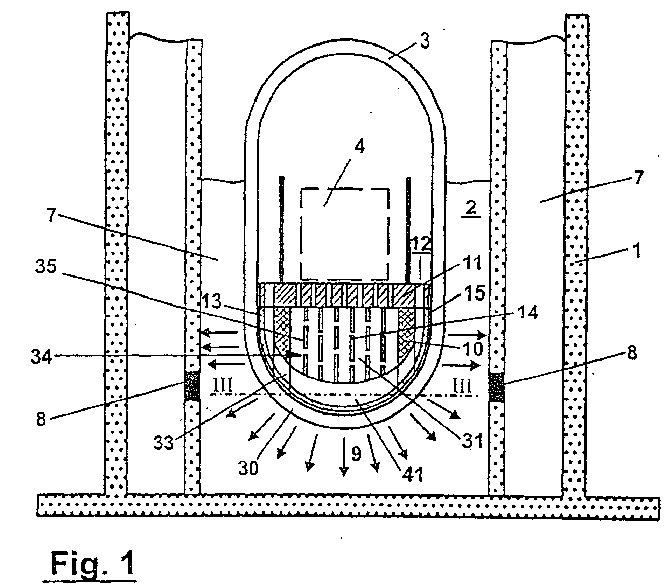

In Fig. 1 ist eine erste erfindungsgemäße Ausgestaltung einer Vorrichtung zum Kühlen eines Reaktordruckbehälters 3 dargestellt, die eine Kerntragplatte 11, die einen Reaktorkern 4 innerhalb des Reaktordruckbehälters 3 trägt, und eine Vorrichtung zum Aufteilen des Volumens unterhalb der Kerntragplatte 11 in eine Mehrzahl von Teilvolumina aufweist.

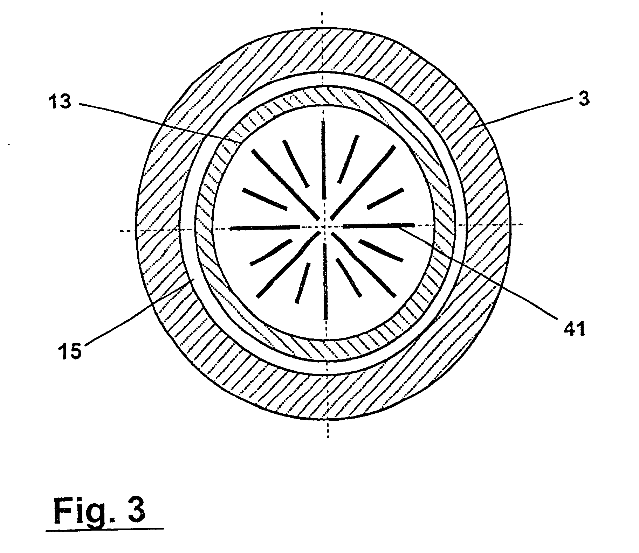

Die Vorrichtung zum Aufteilen des Volumens weist eine im wesentlichen zylindrische Außenwand 10 auf und die Außenwand 10 trägt die Kerntragplatte 11 von unten und ist an der Innenwand der Bodenkalotte 30 des Reaktordruckbehälters 3 abgestützt. Die Außenwand 10 weist weiterhin mindestens eine Öffnung 33 für den Durchtritt eines Kühlmittels in eine Einströmvorrichtung 41 auf, welche - wie in Fig. 3 dargestellt - durch geeignete azimutale Segmentierung auch im Einströmbereich das Volumen des Restwassers auf kleinere Teilmengen begrenzt.

Des weiteren weist die Vorrichtung zum Aufteilen des Volumens innerhalb der Außenwand 10 einen wabenförmigen Einbau 34 auf, der im wesentlichen senkrecht verlaufende, Kammern 31 bildende Zwischenwände 35 aufweist. Der wabenförmige Einbau 34 übernimmt gleichzeitig die Funktion eines Kerntragschemels und einer notwendigen Strömungsvergleichmäßigung für das in den Reaktorkern bei Normalbetrieb eintretende Kühlwasser 12. Der wabenförmige Einbau 34 stützt sich am Boden des Reaktordruckbehälters 3 oder auf der ebenfalls vorgesehenen Isolierung 13 der Bodenkalotte 30 ab. Darüber hinaus weist der wabenförmige Einbau 34 am unteren Ende Durchtrittsöffnungen für eine Kühlflüssigkeit auf, damit eine gleichmäßige Durchströmung aller Kammern 31 ermöglicht wird. Wie der in Fig. 3 dargestellte Querschnitt zeigt, wird das Kühlmittel über eine vorzugsweise sternförmig azimutal segmentierte Einströmvorrichtung 41 zugeführt, um größere Wasseransammlungen und dadurch hervorgerufene Dampfexplosionen in diesem Bereich zu verhindern.

Die Kammern 31 des wabenförmigen Einbaus 34 verhindern eine horizontale Ausbreitung vom Druckwellen und damit von größeren Dampfexplosionen, wenn es bei Eintritt der Kernschmelze in einzelne Kammern 31 doch zu lokalen Dampfexplosionen in den einzelnen Kammern 31 kommt. Versetzte Verbindungsöffnungen 14 zwischen den Kammern 31 sind darüber hinaus für eine weitere Vergleichmäßigung der Einströmung des Kühlwassers im Normalbetrieb vorgesehen. Die Verbindungsöffnungen 14 sind aber so angeordnet und bemessen, daß es durch die Verbindungsöffnungen 14 nicht zu einer schädlichen lateralen Propagation von Druckwellen kommt.

Weiterhin ist eine Isolierungsschicht 13 zumindest im Bereich unterhalb der Kerntragplatte 11 an der Innenwand des Reaktordruckbehälters 3 angeordnet, die mit einem vorgegebenen Abstand zur Innenwand des Reaktordruckbehälters 3 angeordnet ist und einen im wesentlichen durchgängigen Strömungsspalt 15 bildet. Weiterhin weist die Isolierungsschicht 13 Öffnungen und/oder poröse Strukturen zum Durchtreten einer Flüssigkeit auf.

Die hochtemperaturfeste Isolierungsschicht 13 führt zu einem kontrollierten Wärmefluß von der Kernschmelze zur Wandung des Reaktordruckbehälters 3 und verhindert zudem lokale Überhitzungen, wobei die Öffnungen und/oder poröse Strukturen in der Isolierungsschicht bei Unfallbeherrschungsmaßnahmen eine Kühlung der Isolierungsschicht 13 und dosierte Wassereinströmungen in die Kernschmelze erlauben.

Die Wärmekapazität der erfindungsgemäßen Vorrichtung zum Aufteilen des Volumens senkt die Temperatur in der Kernschmelze während des Eintritts kurzfristig ab und führt zu einem Zeitgewinn im Hinblick auf die ebenfalls zeitlich abnehmende Nachwärmeproduktion. Das zusätzliche Volumen der Einbauten 10 sowie der Isolierungsschicht 13 erhöhen zudem selbst nach Aufschmelzen dieser Einbauten den Füllstand der Schmelze in der Bodenkalotte und damit die Wärmeübergangsflächen an der Außenseite des Reaktordruckbehälters 3.

Für mittlere Leistungsgrößen kann dieser Effekt zusammen mit der zuvor beschriebenen vergrößerten Wärmeübergangsfläche bereits ausreichend sein, um die Wärmestromdichte auf der Außenseite des Reaktordruckbehälters 3 hinreichend abzusenken und Unfallbeherrschungsmaßnahmen durch ein Fluten der Reaktorkaverne wirkungsvoll zu unterstützen.

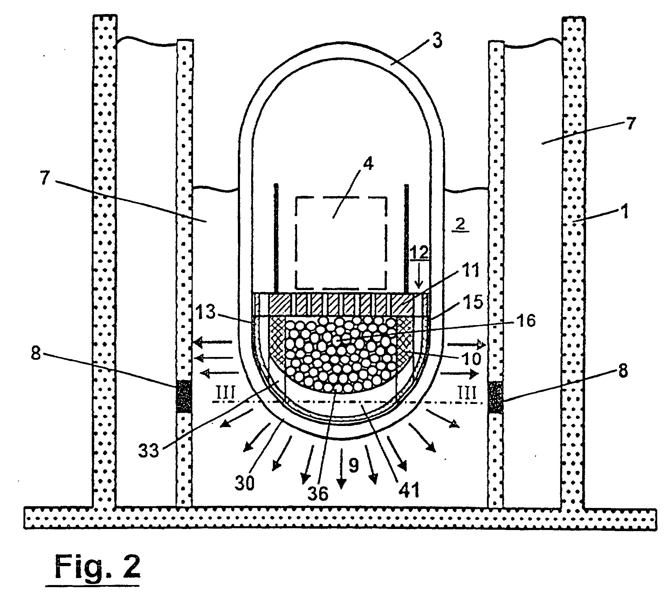

In Fig. 2 ist ein weiteres Ausführungsbeispiel der vorliegenden Erfindung dargestellt. Anstelle des wabenförmigen Einbaus 34 ist eine Schüttung von keramischen oder metallischen Schüttkörpern 16 wie z.B. Kugeln oder durchbohrte Polyeder vorgesehen, die ebenfalls eine Vergleichmäßigung der Strömung und eine Unterbindung großvolumiger Dampfexplosionen bewirken. Weiterhin ist ein am unteren Ende der Außenwand 10 befestigtes gitterförmiges Element 36 vorgesehen, das die Schüttkörper 16 von der Innenwand der Bodenkalotte 30 beabstandet hält. Das gitterförmige Element 36 ist dabei als Netz oder als Gitter mit einer Maschenweite ausgebildet, die geringer als der Durchmesser der Schüttkörper 16 ist. Somit ist ein Eindringen von Kühlmittel von unten möglich. Alternativ kann der Abstand der Strömungsführungswände in der Einströmvorrichtung 41 so gewählt werden, daß er kleiner als der Durchmesser der Schüttkörper 16 ist, um ein Verstopfen der Einströmkanäle zu vermeiden.

Bei entsprechender Materialwahl kann auch die Isolierschicht 13 ganz oder teilweise sowie der Kühlspalt 15 in Form von Schüttungen aus Schüttkörpern 16 ausgebildet sein, da die Schüttkörper auch eine hinreichende Porosität für die Hinterströmung mit Kühlwasser bei Unfallbeherrschungsmaßnahmen sowie mechanische Stabilität bieten.

Weiterhin lassen sich auch die wabenförmigen Einbauten 34 ganz oder teilweise mit Schüttungen keramischer oder metallischer Schüttkörper 16 auffüllen, um die Gefahr von Dampfexplosionen weiter zu reduzieren und das Strömungsbild zu vergleichmäßigen.

Zur besseren Handhabung können die Wandung 10 und der wabenförmige Einbau 34 sowie ggf. auch inklusive der Isolierungsschicht 13 axial, radial oder segmentartig modular aufgebaut sein. Dies erleichtert den Ein- und Ausbau sowie die Inspektion dieser Einbauten. Als Material für diese Einbauten kommen Metalle in Schweiß- oder Gußausführung oder aber auch Keramiken in Betracht, welche unter den hohen Betriebsdrüken und eventuellen Druck- bzw. Temperaturtransienten stabil sind.

Da im Falle einer Kernschmelze die Wandung 10 und der wabenförmige Einbau 34 sowie die Isolierungsschicht 13 im direkten Kontakt mit der Kernschmelze stehen, ergibt sich ein weiterer Vorteil dadurch, daß die Materialien zusätzlich ein Absorbermaterial für Neutronenstrahlung aufweisen. Somit kann in wirkungsvoller Weise eine weitere Kernreaktion unterbunden werden, so daß die von der Kernschmelze erzeugte Wärmeleistung auf die Nachwärme beschränkt bleibt, welche im folgenden Zeitverlauf abnimmt.

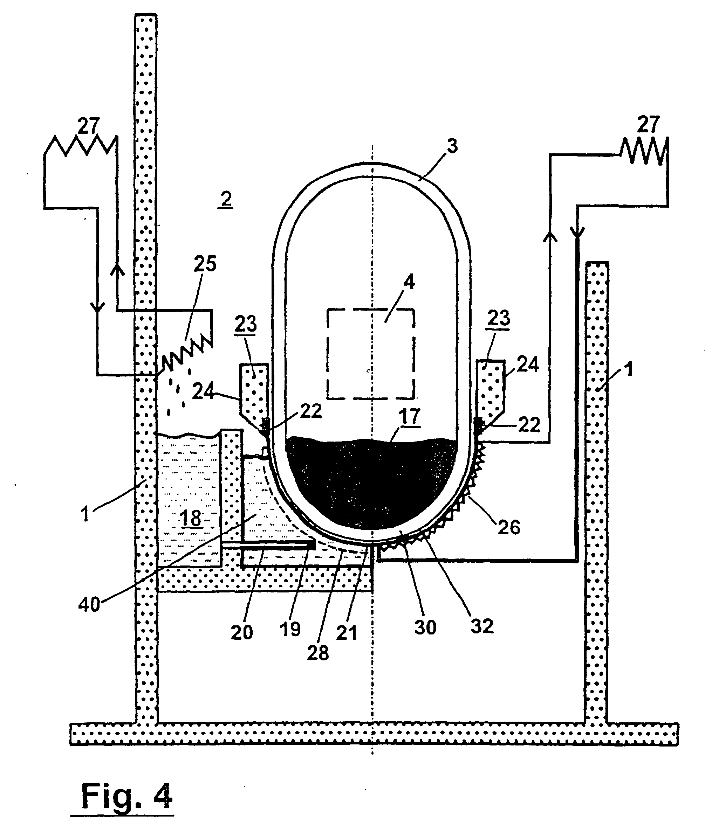

Fig. 4 zeigt zwei Ausführungsbeispiele von außen am Reaktordruckbehälter 3 angebrachten Vorrichtungen zur effektiven Abfuhr der von der Schmelze auf den Reaktordruckbehälter 3 übertragenen Wärmeenergie. Vereinfachend ist dargestellt, daß sich - mit oder ohne Verwendung der in den Fign. 1 und 2 dargestellten inneren Einbauten 10 und 34 oder der Schüttkörper 16 bzw. der Isolierung 13 - im Inneren des Reaktordruckbehälters 3 bereits eine Kernschmelze 17 im Bereich der Bodenkalotte 30 ausgebildet hat.

In Fig. 4 links der Symetrieachse ist eine Kühlvorrichtung dargestellt, die von innerhalb oder außerhalb der Reaktorkaverne 2 liegenden Wasservorratsbehältern 18 bespeist wird. Redundant zu aktiv ausgelösten Einspeisungen ist - in Analogie zur Schmelzsicherung 8 in Fig. 1 - ebenfalls eine Schmelzsicherung 19 am Ende des Zuführungsrohres 20 vorgesehen, welche bei einer Erhöhung der Temperatur des Reaktordruckbehälters 3 anspricht und die Zufuhr von Kühlwasser in die Kühlvorrichtung in Gang setzt.

Die Kühlvorrichtung besteht aus einer Wandung 21, die den Reaktordruckbehälter 3 mit geringem Abstand bis über die zu erwartende maximale Höhe der Kernschmelze 17 umschließt. Die Wandung 21 dient zusammen mit dem Zwischenraum 32 im Normalbetrieb als Isolierung des Reaktordruckbehälters 3. Im Fall einer Kernschmelze bewirken Schmelzsicherung 22 oder ein anderer Auslösungsmechanismus das Einrieseln von - bei niedrigeren Temperaturen - schmelzfähigem Granulat 23 in den Zwischenraum 32 zwischen dem Reaktordruckbehälter 3 und der Wandung 21, sofern nicht schon direkt im Behälter 24 eine Metallschmelze durch die dort herrschenden Temperaturen erzeugt wird. Alternativ können im Behälter 24 auch andere - strahlungsresistente - feste oder flüssige Wärmeträger (z.B. Wärmeöle, Paraphine, Salze) vorgehalten werden. Weiterhin sind zusätzlich in dem Zwischenraum 32 Materialien (z.B. Fasern, Bleche etc.) angeordnet.

Das flüssige Metall, z.B. Blei-/Zinnlegierungen mit oder ohne Zusätzen zur Verbesserung der Fließeigenschaften oder zur Beseitigung von Verzunderungen der zu kühlenden Oberfläche der Reaktordruckbehälters, stellt eine extrem gut wärmeleitende Verbindung zwischen dem Reaktordruckbehälter 3 und der Wandung 21 der Kühlvorrichtung dar und hebt die isolierende Wirkung der sich in diesem Bereich aus betrieblichen Gründen befindlichen Isoliermaterialien auf, z.B. dadurch, daß das flüssige Metall die Faser- oder Folienpakungen durchdringt.

Die Wärmeübertragung von der Wandung 21 an das Kühlwasser wird auf bekannte Weise z.B. durch Kühlrippen 28 oder durch Ausbildung der Wandung 21 als gewellte Oberfläche gegenüber einer direkten Kühlung des Reaktordruckbehälters 3 erheblich verbessert.

Die Wandung 21 kann auch in einer Weise gekühlt werden, daß sich nach dem Verfüllen des Zwischenraums 32 mit flüssigem Metall und danach einsetzender Kühlung an den Kühlflächen dünne, feste Ablagerungen des metallischen Wärmeträgers 23 bilden, die eventuelle Risse in der Wandung 21 oder der Wand des Reaktordruckbehälters 3 selbsttätig verschließen. Wegen des höheren spezifischen Gewichts eines metallischen Wärmeträgers kann es zudem auch nicht zu Übertritten von Kühlwasser in diesen Spalt kommen. Der Wasserstand im Vorratsbehälter 18 kann daher auch im Verhältnis der Produkte der spezifischen Gewichte und des Füllstandes von Kühlwasser und dem des spezifischen Gewichts des verwendeten Wärmeträgers mit seinem Füllstand im Übertragungsspalt entsprechend erhöht werden.

Das Wasserbecken läßt sich durch Kühler 25 über dem Vorratsbecken in bekannter Weise durch Kondensation des Wasserdampfes in der Containment-Atmosphäre auffüllen, so daß eine langfristige Kühlung der Kernschmelze sichergestellt werden kann. Grundsätzlich kann über das Zuführungsrohr 20 auch eine gedrosselte Zufuhr von Kühlwasser in der Größenordnung der zu erwartenden Verdampfungsraten erfolgen.

Auf der rechten Seite zeigt die Fig. 4 eine Ausführung mit deutlich verringertem Bauvolumen. Anstelle eines größeren Kühlwasservolumens ist hier entweder nur ein schmalerer Kühlwasser-Behälter oder - wie dargestellt - ein Kühlsystem mit Kühlrohren 26 vorgesehen, die direkt mit der Wandung 21 im Wärmeaustausch stehen. Ein derartiges Kühlsystem kann z.B. im Naturumlauf mit höhergelegenen Wärmetauschern 27 oder im Zwangsumlauf in einer Weise betrieben werden, daß ein Filmsieden im Wärmeübertragungsbereich nicht auftritt und die Nachwärme ohne Zerstörung der Bodenkalotte durch Überhitzung abgeführt werden kann. Diese Ausführung hat den Vorteil, daß sie modular als Funktionseinheit ausgeführt und ähnlich wie die vorhandenen Isolierungen befestigt bzw. ausgetauscht werden kann. Damit wäre diese Bauausführung prinzipiell auch für die Nachrüstung bestehender Reaktoren geeignet.

Selbstverständlich kann die beschriebene Notkühlung auch für andere - nicht nukleare - Anwendungsfälle (z.B. in Chemie, Metallverhüttung, Verfahrenstechnik) benutzt werden, um Überhitzungen von Druck- oder anderen Behältern bei Störfällen zu vermeiden.

Außerdem läßt sich das Grundprinzip der verbesserten Wärmeabfuhr auch auf andere Bauweisen von Reaktordruckbehältern bzw. allgemeinen Druckbehältern wie z.B. vorgespannte Guß-Druckbehälter (VGD) übertragen. Bei diesen Guß-Druckbehältern wird die innen befindliche Dichthaut (Liner) direkt von den beschriebenen Wärmeträgermedien gekühlt und die Wärme erfindungsgemäß auf die Tragstrukturen oder spezielle Kühlsysteme übertragen.

### Bezugszeichenliste

- 1: Reaktorsicherheitsbehälter
- 2: Raktorkaverne
- 3: Raktordruckbehälter
- 4: Reaktorkern
- 5: metallische Schmelzphase
- 6: oxidische Phase
- 7: Wasser
- 8: Schmelzsicherung
- 9: Wärmestrahlung
- 10: Außenwand
- 11: Kerntragplatte
- 12: Kühlwasser
- 13: Isolierungsschicht
- 14: Verbindungsöffnung
- 15: Strömungsspalt
- 16: Schüttkörper
- 17: Kernschmelze
- 18: Wasservorratsbehälter
- 19: Schmelzsicherung
- 20: Zuführungsrohr
- 21: Wandung
- 22: Schmelzsicherung
- 23: Wärmeträger
- 24: Behälter
- 25: Kühler
- 26: Kühlrohr
- 30: Bodenkalotte
- 31: Kammer
- 32: Zwischenraum
- 33: Öffnung in 10
- 34: wabenförmiger Einbau
- 35: Zwischenwände
- 36: Gitter
- 40: Kühlmittelbecken
- 41: Einströmvorrichtung

## Patentansprüche

1. Vorrichtung zum Kühlen eines Reaktordruckbehälters (3),
- mit einem Kühlmittelvorratsbehälter (18, 27),
- mit einer Wandung (21), die die Außenseite des Reaktordruckbehälters (3) zumindest im Bereich der Bodenkalotte (30) mit einem vorgegebenen Abstand umgibt und einen Zwischenraum (32) bildet,
- mit einer Kühlvorrichtung (40, 26), die die Wandung (21) zumindest teilweise umgibt, und
- mit mindestens einem Behälter (24) zur Aufnahme eines Wärmeträgers (23),
- wobei der Behälter (24) bei Erreichen einer vorgegebenen Temperatur den Wärmeträger (23) in den Zwischenraum (32) abgibt,
**dadurch gekennzeichnet,**
- **daß** der Wärmeträger (23) eine Schmelztemperatur zwischen 100°C und 300°C aufweist und eine Siedetemperatur größer als 2000°C

2. Vorrichtung nach Anspruch 1,
**dadurch gekennzeichnet,**
**daß** der Behälter (24) redundant oder alternativ zu aktiven Auslösungsmechanismen eine Schmelzsicherung (22) aufweist.

3. Vorrichtung nach Anspruch 1 oder 2,
**dadurch gekennzeichnet,**
**daß** die Wandung (21) den Reaktordruckbehälter (3) bis über die zu erwartende maximale Höhe der Kernschmelze umgibt.

4. Vorrichtung nach einem der Ansprüche 1 bis 3,
**dadurch gekennzeichnet,**
**daß** die Wandung (21) Kühlrippen (28) oder eine gewellte Oberfläche aufweist.

5. Vorrichtung nach einem der Ansprüche 1 bis 4,
**dadurch gekennzeichnet,**
**daß** der Zwischenraum (32) zumindest teilweise mit einem Isoliermaterial ausgefüllt ist, das vorzugsweise aus Fasermaterial oder aus Blechen besteht.

6. Vorrichtung nach einem der Ansprüche 1 bis 5,
**dadurch gekennzeichnet,**
**daß** der Wärmeträger (23) als schmelzfähiges Granulat ausgebildet ist und vorzugsweise aus einer Blei- oder Zinnlegierung besteht.

7. Vorrichtung nach einem der Ansprüche 1 bis 5,
**dadurch gekennzeichnet,**
**daß** der Wärmeträger (23) als Wärmeöl, Paraphin oder als Salz und vorzugsweise strahlungsresistent ausgebildet ist.

8. Vorrichtung nach einem der Ansprüche 1 bis 7,
**dadurch gekennzeichnet,**
**daß** die Kühlvorrichtung als ein Kühlmittelbecken (40) ausgebildet ist, das von dem Kühlmittelvorratsbehälter (18) gespeist ist.

9. Vorrichtung nach Anspruch 8,
**dadurch gekennzeichnet,**
**daß** der Kühlmittelvorratsbehälter (18) bei Erreichen einer vorgegebenen Temperatur ein Kühlmittel in das Kühlmittelbecken (40) abgibt.

10. Vorrichtung nach Anspruch 8 oder 9,
**dadurch gekennzeichnet,**
**daß** der Kühlmittelvorratsbehälter (18) eine sich in das Kühlmittelbecken (40) erstreckendes Zuführleitung (20) aufweist, die redundant oder alternativ zu aktiven Auslösungsmechanismen mit einer Schmelzsicherung (19) versehen ist.

11. Vorrichtung nach einem der Ansprüche 1 bis 7,
**dadurch gekennzeichnet, daß** die Kühlvorrichtung mindestens ein Kühlrohr (26) aufweist, das mit der Wandung (21) direkt im Wärmeaustausch steht und das von dem Kühlmittelvorratsbehälter (27) mit Kühlmittel beaufschlagt ist.

12. Vorrichtung nach Anspruch 11,
**dadurch gekennzeichnet,**
**daß** die Kühlvorrichtung modular aus Kühlrohren (26) aufgebaut ist.

13. Verwendung einer Vorrichtung zum Kühlen eines Reaktordruckbehälters nach den Ansprüchen 1 bis 12 bei nicht-kerntechnischen Anlagen wie beispielsweise in der Chemie, der Metallverhüttung und der Verfahrenstechnik zum Vermeiden von Überhitzungen von Behältern bei Störfällen.

14. Verwendung einer Vorrichtung zum Kühlen eines Druckbehälters nach den Ansprüchen 1 bis 12 bei vorgespannten Guß-Druckbehältern (VGD) zur direkten Kühlung der Dichthaut (Liner).

## Claims

1. Device for cooling a reactor pressure vessel (3),
- with a coolant reservoir (18, 27),
- with a wall (21), which surrounds the outside of the reactor pressure vessel (3), at least in the area of the lower head (30) at a specified distance and forms a gap (32),
- with a cooling device (40, 26) which at least partially surrounds the wall (21), and
- with at least one reservoir (24) to accommodate a heat transfer medium (23),
- where the reservoir (24) on reaching a specified temperature releases the heat transfer medium (23) into the gap (32),
**characterised in that**
- the heat transfer medium (23) displays a melting point of between 100°C and 300°C and a boiling point of over 2000°C.

2. Device according to claim 1,
**characterised in that**
the reservoir (24) displays a fusible cut-out (22) which is redundant or alternative to active triggering mechanisms.

3. Device according to claim 1 or 2,
**characterised in that**
the wall (21) surrounds the reactor pressure vessel (3) beyond the anticipated maximum height of the molten core.

4. Device according to one of claims 1 to 3,
**characterised in that**
the wall (21) displays cooling fins (28) or a corrugated surface.

5. Device according to one of claims 1 to 4,
**characterised in that**
the gap (32) is at least partially filled with an insulating material, which consists for preference of fibrous material or of metal plates.

6. Device according to one of claims 1 to 5,
**characterised in that**
the heat transfer medium (23) is in the form of meltable granulate and preferably consists of a lead or tin alloy.

7. Device according to one of claims 1 to 5,
**characterised in that**
the heat transfer medium (23) is in the form of heating oil, paraffin or salt and is preferably radiation-resistant.

8. Device according to one of claims 1 to 7,
**characterised in that**
the cooling device is designed as a coolant tank (40) which is fed from the coolant reservoir (18).

9. Device according to claim 8,
**characterised in that**
the coolant reservoir (18), on reaching a specified temperature, releases a coolant into the coolant tank (40).

10. Device according to claim 8 or 9,
**characterised in that**
the coolant reservoir (18) displays a supply line (2) which extends into the coolant tank (40), said supply line being provided with a fusible cut-out (19) which is redundant or alternative to active triggering mechanisms.

11. Device according to one of claims 1 to 7,
**characterised in that** the cooling device displays at least one cooling pipe (26) which is in direct heat exchange with the wall (21) and which is supplied with coolant by the coolant reservoir (27).

12. Device according to claim 11,
**characterised in that**
the cooling device is of modular construction from cooling pipes (26).

13. Application of a device for cooling a reactor pressure vessel according to claims 1 to 12 in non-nuclear plants, such as for example in the chemical industry, metal smelting and process technology to prevent overheating of containers in the event of faults.

14. Application of a device for cooling a pressure vessel according to claims 1 to 12 in pre-stressed cast-iron pressure vessels (VGD) for direct cooling of the liner.

## Revendications

1. Dispositif pour refroidir le caisson sous pression (3) d'un réacteur, comportant
- un réservoir (18, 27) pour un fluide de refroidissement,
- une paroi (21), qui entoure à une distance prédéterminée le côté extérieur du caisson sous pression (3) du réacteur au moins dans la zone de la calotte de fond (30) et forme un espace intercalaire (32),
- un dispositif de refroidissement (40, 26), qui entoure au moins partiellement la paroi (21), et
- au moins un récipient (24) pour loger un caloporteur (23),
- le récipient (24) délivrant le caloporteur (23) dans l'espace intercalaire (32) lorsqu'une température prédéterminée est atteinte,
**caractérisé en ce**
- **que** le caloporteur (23) possède une température de fusion comprise entre 100°C et 300°C et une température d'ébullition supérieure à 2000°C.

2. Dispositif selon la revendication 1, **caractérisé en ce que** le récipient (24) comporte, d'une manière redondante avec ou à la place de mécanismes actifs de déclenchement, un fusible (22).

3. Dispositif selon la revendication 1 ou 2, **caractérisé en ce que** la paroi (21) entoure le caisson sous pression (3) du réacteur jusqu'au-dessus de la hauteur maximale, à laquelle on peut s'attendre, de la masse fondue du coeur.

4. Dispositif selon l'une des revendications 1 à 3, **caractérisé en ce que** la paroi (21) comporte des ailettes de refroidissement (28) ou une surface ondulée.

5. Dispositif selon l'une des revendications 1 à 4, **caractérisé en ce que** l'espace intercalaire (32) est rempli au moins en partie par un matériau isolant, qui est constitué de préférence par un matériau formé de fibres ou par des tôles.

6. Dispositif selon l'une des revendications 1 à 5, **caractérisé en ce que** le caloporteur (23) est réalisé sous la forme de granulés fusibles et est constitué de préférence par un alliage de plomb ou d'étain.

7. Dispositif selon l'une des revendications 1 à 5, **caractérisé en ce que** le caloporteur (23) est constitué sous la forme d'une huile thermique, de paraffine ou de sel et est réalisé de préférence de manière à résister au rayonnement.

8. Dispositif selon l'une des revendications 1 à 7, **caractérisé en ce que** le dispositif de refroidissement est agencé sous la forme d'un bassin (40) pour fluide de refroidissement, qui est alimenté par le réservoir (18) du fluide de refroidissement.

9. Dispositif selon la revendication 8, **caractérisé en ce que** le réservoir (18) du fluide de refroidissement délivre un fluide de refroidissement au bassin (40) du fluide de refroidissement lorsqu'une température prédéterminée est atteinte.

10. Dispositif selon la revendication 8 ou 9, **caractérisé en ce que** le réservoir (18) du fluide de refroidissement comporte une conduite d'amenée (20), qui s'étend dans le bassin (40) du fluide de refroidissement et qui comporte, en plus ou à la place de mécanismes actifs de déclenchement, un fusible (19).

11. Dispositif selon l'une des revendications 1 à 7, **caractérisé en ce que** le dispositif de refroidissement comporte au moins un tube de refroidissement (26), qui est relié directement selon une liaison d'échange thermique, à la paroi (21) et est chargé par le fluide de refroidissement à partir du réservoir (27) du fluide de refroidissement.

12. Dispositif selon la revendication 11, **caractérisé en ce que** le dispositif de refroidissement est constitué de façon modulaire par des tubes de refroidissement (26).

13. Utilisation d'un dispositif pour le refroidissement d'un caisson sous pression du réacteur selon les revendications 1 à 12, dans le cas d'installations ne faisant pas partie de la technique nucléaire, comme par exemple dans le domaine de la chimie, de la métallurgie et de la technique des procédés industriels pour éviter des échauffements excessifs de récipients dans des cas de pannes.

14. Utilisation d'un dispositif pour refroidir un récipient sous pression selon les revendications 1 à 12 dans des récipients sous pression précontraints de fonderie (VGD) pour le refroidissement direct de la peau d'étanchéité (liner).
